# EUROPÄISCHE PATENTSCHRIFT

(11) **EP 2 910 355 B1**
(45) Veröffentlichungstag und Bekanntmachung des Hinweises auf die Patenterteilung: **07.09.2016**
(21) Anmeldenummer: 15155917.6
(22) Anmeldetag: 20.02.2015
(51) Int. Cl.: B29B 17/02, B03B 5/00, B08B 3/04

(54) **Vorrichtung zum Waschen von Schüttgut**
Device for washing bulk material
Dispositif de lavage de matière en vrac

(30) Priorität: 21.02.2014 DE 202014100802 U
(43) Veröffentlichungstag der Anmeldung: 26.08.2015
(73) Patentinhaber: STF Maschinen- & Anlagenbau GmbH, 94529 Aicha vorm Wald (DE)
(72) Erfinder: Söllner, Josef, 94529 Aicha vorm Wald (DE)
(74) Vertreter: Gustorf, Gerhard

(56) Entgegenhaltungen:
- EP-A2- 0 034 780
- DE-A1- 2 717 009
- JP-A- 2004 174 467

## Beschreibung

Die Erfindung betrifft eine Vorrichtung zum Waschen von Schüttgut, insbesondere von zerkleinerten Kunststoffabfällen oder Granulat nach dem Oberbegriff des Anspruchs 1.

Für die Wiederverwendung von Behältern aus Kunststoff, insbesondere PET-Flaschen, ist es erforderlich, diese zunächst zu zerkleinern, wodurch schüttfähiges Mahlgut in Form von PET-Flakes hergestellt wird. Bevor dieses Mahlgut zur Herstellung neuer Verpackungsmittel weiterverarbeitet wird, ist eine Reinigung notwendig. Insbesondere für eine Weiterverwertung in der Lebensmittelindustrie ist es unumgänglich, das Kunststoffgut gründlich zu waschen, um Restverschmutzungen, beispielsweise anhaftende Laugen oder Benzol, zu entfernen.

Gegenstand von DE 30 28 686 A1 sind ein Verfahren zum Waschen von Schüttgut und eine Vorrichtung zur Durchführung eines solchen Verfahrens. Die Vorrichtung besteht dort aus einem stehenden Behälter, durch dessen Deckel ein feststehendes Waschrohr hindurchtritt, in dem eine vertikale Welle mit Waschflügeln angeordnet ist, die von einem Rührwerksmotor angetrieben wird. Der obere Teil des Waschrohres ist als Einlaufkonus ausgebildet, in den radial ein Einlaufstutzen mündet, durch den sowohl das zu waschende Gut als auch die Waschflüssigkeit zugeführt wird. Innerhalb des Waschrohres strömt dieses Gemisch nach unten und wird durch die Waschflügel in Turbulenzen versetzt, wodurch der Waschvorgang abläuft. Am unteren Ende des Waschrohres tritt das gewaschene Gut aus, wobei die davon abgetrennten Schmutzpartikel in einen Schlammkonus gelangen, während das gewaschene Gut an schräg angebrachten Lamellen nach oben strömt. Dabei rutschen noch anhaftende Verunreinigungen an den Innenseiten der Lamellen in Richtung Schlammkonus. Zur Beschleunigung der aufwärts gerichteten Bewegung des gewaschenen Gutes wird durch ein Ringrohr eine weitere Flüssigkeit zugeführt, die die aufwärts gerichtete Bewegung des gewaschenen Gutes unterstützt, das am oberen Ende eines Innenkonus austritt und über einen Ablaufstutzen nach außen abgeführt wird.

Aus dem Dokument JP 2004 174467 A, das den nächstkommenden Stand der Technik bildet, ist eine Vorrichtung der im Oberbegriff des Anspruchs 1 umrissenen Bauart bekannt, die dazu dient, dünne Kunststoffteile und Waschflüssigkeit voneinander zu trennen. Dabei ist in einem Siebzylinder ein Rotor vorgesehen, dessen unteres Ende über eine massive Welle in einem Gehäuse drehbar gelagert ist und an dessen Zylinderwand Paddel angebracht sind, die in dem Ringraum zwischen Rotor und Gehäuse entgegen der Flüssigkeitsströmung von oben nach unten das Waschgut nach oben fördern.

In EP 034 780 A2 ist ein Rotationssortierer mit einer Trommel beschrieben und dargestellt, die innerhalb eines Siebkorbes rotiert und an ihrem Zylindermantel Flügel hat, welche die Suspension erfassen und in dem Siebkorb nach oben fördern. Der Rotor ist mittels einer massiven Antriebswelle im unteren Teil des Gehäuses fliegend gelagert.

Der Erfindung liegt die Aufgabe zugrunde, eine alternativ ausgebildete Waschvorrichtung zur Verfügung zu stellen, die einfach aufgebaut ist, ohne dadurch die Effizienz des Waschvorganges zu mindern.

Zur Lösung dieser Aufgabe dient die Vorrichtung mit den Merkmalen des Anspruchs 1, wonach sowohl der zylindrische Behälter als auch das darin koaxial befestigte Rohr in Drehung versetzt werden und an der Außenwand des Behälters Förderpaddel angebracht sind, die bei der Rotation des Behälters das gereinigte Gut nach oben fördern.

Sowohl das Rohr als auch der rotierend angetriebene Behälter haben Durchtrittsöffnungen für die Waschflüssigkeit, die über das Rohr von oben zugeführt wird und anschließend durch die Öffnungen in den Behälter und von dort über weitere Öffnungen in den Ringraum zwischen Behälter und Gehäuse gelangt. Dort beaufschlagt die Waschflüssigkeit die nach oben mitgenommenen Flakes, wobei die durch die Rotation erzeugten Fliehkräfte das Gut intensiv reinigen.

Dabei ist es von Vorteil, wenn die Förderpaddel aus Windungsabschnitten einer Förderschnecke bestehen, die über den Umfang mit Abstand voneinander an der Außenwand des rotierenden Behälters befestigt sind.

In Weiterbildung der Erfindung hat das Gehäuse an seinem zylindrischen Mantel Öffnungen für den Lufteintritt in das Gehäuse, die vorzugsweise nach außen durch Schutzschirme teilweise abgedeckt sind. Die eintretende Luft wird durch den von dem rotierenden Behälter erzeugten Sog nach oben geleitet und sorgt im oberen Bereich des Gehäuses für eine Vortrocknung.

Nach einem weiteren Merkmal der Erfindung können am oberen Ende des Behälters Austragsschaufeln angebracht sein, die das gewaschene Schüttgut aus dem Behälter herausschleudern, wo es durch einen Austrittskanal nach außen gelangt.

Im Vergleich zum eingangs erläuterten Stand der Technik ist es besonders vorteilhaft, wenn am unteren Ende des Gehäuses ein in dieses radial oder tangential mündender Beschickungskanal für das zu reinigende Schüttgut angebracht ist. Auf diese Weise erfolgt bereits bei der Zuführung eine Trennung zwischen Schüttgut und Reinigungsflüssigkeit, da diese bei der Lösung gemäß der Erfindung nicht als Gemisch zusammen mit dem Schüttgut in das Rohr eingeleitet wird.

Die Erfindung ist nachstehend an einem Ausführungsbeispiel erläutert, das in der Zeichnung dargestellt ist. Es zeigen:
Figur 1 eine schematische Schnittdarstellung durch eine Vorrichtung nach der Erfindung,
Figur 2 eine der Figur 1 ähnliche Darstellung der Vorrichtung mit Außenansicht des rotierenden Behälters,
Figur 3 eine der Figur 2 entsprechende Darstellung der Vorrichtung in einer um 90° gedrehten Stellung und
Figur 4 eine Schrägansicht der in den Figuren 2 und 3 gezeigten Vorrichtung.

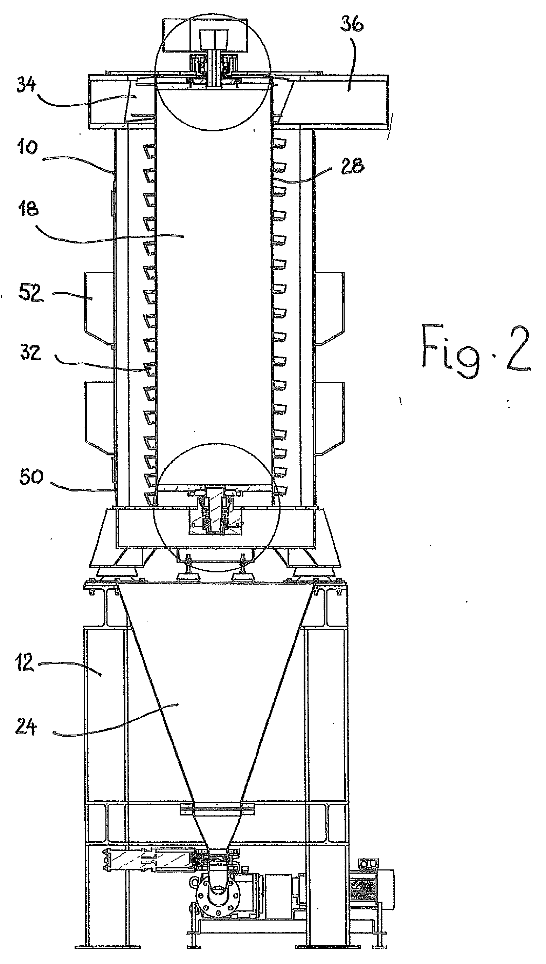

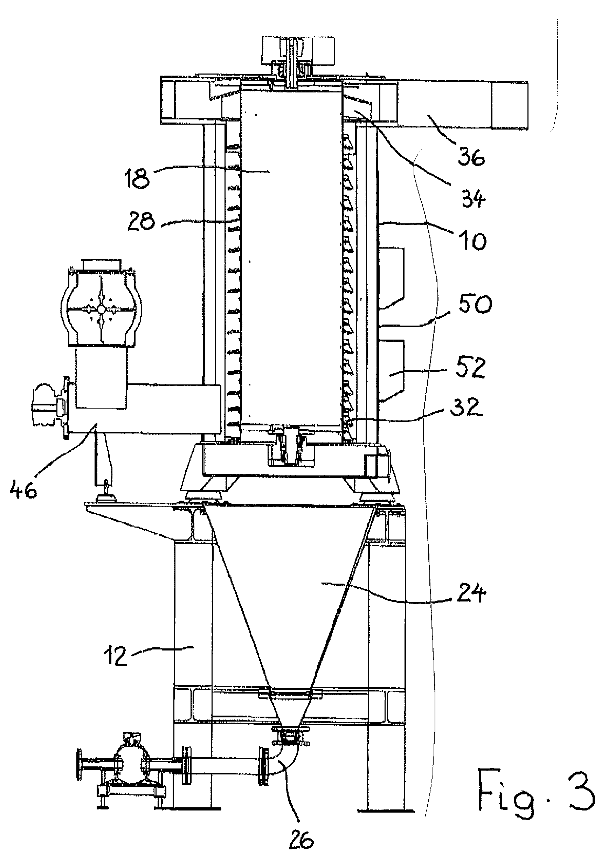

Die im Ausführungsbeispiel gezeigte Vorrichtung gemäß der Erfindung hat ein zylindrisches Gehäuse 10, das auf einem Gestell 12 (vgl. Figuren 2 bis 4) vertikal stehend angebracht ist. Koaxial in dem Gestell 12 ist über ein oberes und ein unteres Lager 14 ein Rohr 16 drehbar gelagert, das axial durch einen zylindrischen Behälter 18 hindurchtritt und an dessen Deckel 20 und Boden 22 fest angebracht ist.

Das Rohr 16 mündet mit seinem unteren Ende in einen Schlammkonus 24, der in ein Auslassrohr 26 führt.

Sowohl das Rohr 16 als auch die Außenwand 28 des rotierenden Behälters 18 haben Durchtrittsöffnungen 30 bzw. 30' für die Reinigungsflüssigkeit (Wasser).

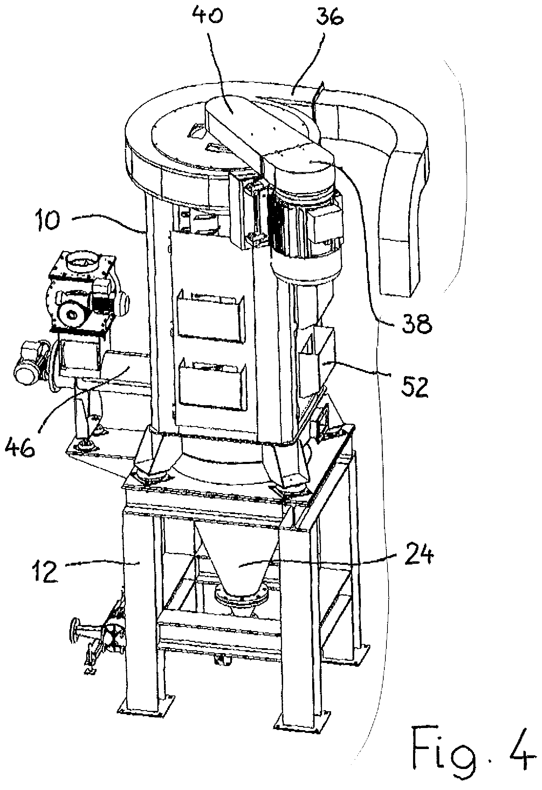

An der Außenwand 28 sind über den Umfang Förderpaddel 32 angebracht, die aus Windungsabschnitten einer Förderschnecke bestehen. Am oberen Ende des Behälters 18 sind außen Austragsschaufeln 34 befestigt, die in Höhe eines Austrittskanals 36 liegen, der gemäß Figur 4 in tangentialer Richtung aus dem Gehäuse 10 herausführt.

Aus Figur 4 geht weiter hervor, dass an dem Gehäuse 10 seitlich ein eingehauster Motor 38 angebracht ist, der über einen ebenfalls eingehausten Riementrieb 40 das Rohr 16 und mit diesem den Behälter 18 in Drehung versetzt. Auf diese Weise dient das Rohr 16 als Rotationsantriebswelle für den Behälter 18.

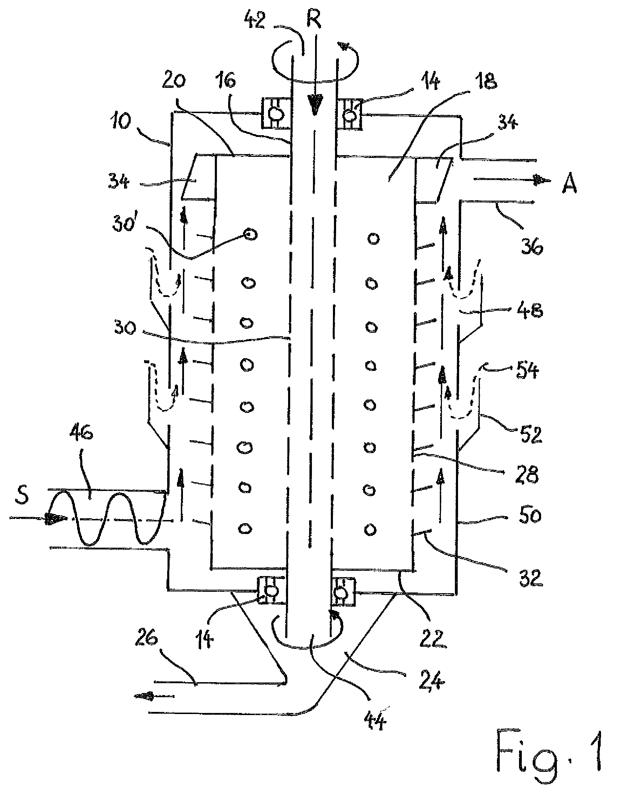

Die für die Reinigung erforderliche Waschflüssigkeit, vorzugsweise reines Wasser, wird in Richtung des in Figur 1 gezeigten Pfeiles R durch eine obere Eintrittsöffnung 42 des Rohres 18 zugeführt; am unteren Ende hat das Rohr 18 eine Austragsöffnung 44 für die verbrauchte Waschflüssigkeit.

Am unteren Ende des Gehäuses 10 ist ein Beschickungskanal 46 angebracht, durch den in Richtung des eingezeichneten Pfeiles S das zu reinigende Schüttgut in den Ringraum zwischen dem Gehäuse 10 und dem Behälter 18 gelangt. Hier wird es aufgrund der Rotation des Behälters 18 über die Förderpaddel 32 in Richtung der eingezeichneten Pfeile vertikal nach oben mitgenommen und gelangt am oberen Ende des Behälters 18 in den Wirkungsbereich der Austragsschaufeln 34, die das gewaschene Schüttgut aus dem Behälter 18 in den Austrittskanal 36 schleudern.

Zur Reinigung des Schüttgutes wird über die Eintrittsöffnung 42 die Reinigungsflüssigkeit R (Wasser) zugeführt, die auf ihrem Weg nach unten über die Durchtrittsöffnungen 30 das Rohr 16 verlässt und in den Innenraum des Behälters 18 gelangt und von dort über die Durchtrittsöffnungen 30' in der Außenwand 28 des Behälters 18 in den Bereich der Förderpaddel 32 geschleudert wird. Aufgrund der Zentrifugalkräfte ist die dabei erzielte Reinigung sehr intensiv.

Das Gehäuse 10 hat an seinem zylindrischen Mantel 50 Luftöffnungen 48 (vgl. Figur 1), die gemäß Figur 4 nach außen durch Schutzschirme 52 teilweise abgedeckt sind. In Figur 1 ist gestrichelt dargestellt, dass durch diese Öffnungen 48 Luft 54 von außen in den Zwischenraum zwischen Gehäuse 10 und Behälter 18 gelangt und dort nach oben mitgerissen wird. Auf diese Weise wird das gewaschene Gut im oberen Bereich des Gehäuses bereits vorgetrocknet.

## Patentansprüche

1. Vorrichtung zum Waschen von Schüttgut, insbesondere von zerkleinerten Kunststoffabfällen oder Granulat, umfassend einen vertikal angeordneten, zylindrischen Behälter (18) mit einem darin koaxial befestigten Rohr (16) mit einer oberen Eintrittsöffnung (42) für die Zufuhr von Waschflüssigkeit (R), vorzugsweise Wasser, und einer unteren Austragsöffnung (44) für die verbrauchte Waschflüssigkeit, wobei Mittel zum Beschicken des zu reinigenden Schüttgutes (S) sowie Austragsmittel (A) für das gewaschene Schüttgut vorgesehen sind, **dadurch gekennzeichnet, dass** das fest mit dem Behälter (18) verbundene Rohr (16) drehbar in einem zylindrischen Gehäuse (10) gelagert und mit einem Antriebsmotor (38) verbunden ist, so dass es als Rotationsantriebswelle für den im Gehäuse (10) gelagerten Behälter (18) dient, an dessen Außenwand (28) Förderpaddel (32) zur Mitnahme des am unteren Ende des Gehäuses (10) eingebrachten Gutes (S) nach oben befestigt sind, wobei sowohl das Rohr (16) als auch der rotierend angetriebene Behälter (18) Durchtrittsöffnungen (30, 30') für die Waschflüssigkeit haben.

2. Vorrichtung nach Anspruch 1, **dadurch gekennzeichnet, dass** die Förderpaddel (32) aus Windungsabschnitten einer Förderschnecke bestehen.

3. Vorrichtung nach Anspruch 1 oder 2, **dadurch gekennzeichnet, dass** das Gehäuse (10) an seinem zylindrischen Mantel (50) Luftöffnungen (48) für den Lufteintritt in das Gehäuse (10) aufweist.

4. Vorrichtung nach Anspruch 3, **dadurch gekennzeichnet, dass** die Luftöffnungen (48) nach außen durch Schutzschirme (52) teilweise abgedeckt sind.

5. Vorrichtung nach einem der vorhergehenden Ansprüche, **dadurch gekennzeichnet, dass** am oberen Ende des Behälters (18) Austragsschaufeln (34) zum Herausschleudern des gewaschenen Schüttgutes in einen am oberen Ende des Gehäuses (10) angebrachten Austrittskanal (36) befestigt sind.

6. Vorrichtung nach einem der vorhergehenden Ansprüche, **dadurch gekennzeichnet, dass** am unteren Ende des Gehäuses (10) ein in dieses radial oder tangential mündender Beschickungskanal (46) angebracht ist.

## Claims

1. Device for washing bulk material, in particular plastic chips or granulates, comprising a vertically positioned cylindric container (18) in which a tube (16) is coaxially fastened having an upper entrance port (42) for feeding a scouring solution (R), preferably water, and a lower outlet (44) for discharging used scouring solution, wherein means are provided for charging the bulk material (S) to be washed and for discharging the cleaned bulk material (A), **characterized in that** said tube (16) fastened in the container (18) is rotably mounted in a cylindrical housing (10) and is connected with a driving motor (38) such that it serves as a rotary driving shaft for the container (18) mounted in said housing (10), said container (18) having conveying paddles (32) firmly attached to the outer wall (28) of the container (18) for upward driving the material (S) charged into the lower end of the housing (10), wherein said tube (16) as well as the rotably driven container (18) are provided with flow passages (30, 30') for said scouring solution (R).

2. Device according to claim 1 wherein said conveying paddles (32) consist of spire sections of a conveyor screw.

3. Device according to claim 1 or 2, wherein the cylindrical shell (50) of said housing (10) is provided with air inlet openings (48) leading into the housing (10).

4. Device according to claim 3, wherein said air inlet openings (48) are partially covered by outer protecting shields (52).

5. Device according to any of the preceding claims, wherein shovel pans (34) are fastened on the upper end of the container (18) adapted to eject the cleaned material from the container (18) into a delivery conduit (36) fastened on the upper end of the housing (10).

6. Device according to any of the preceding claims, wherein a charging conduit (46) is connected to the lower end of the housing (10) into which it is leading in a radial or tangential direction.

## Revendications

1. Dispositif de lavage de matière en vrac, particulièrement de déchets plastiques ou de granulés, comprenant un récipient cylindrique (18) verticalement positionné dans lequel est coaxialement fixé un tube (16) avec une lumière supérieure d'admission (42) de liquide laveur (R), de préférence d'eau, et avec un orifice inférieur de sortie (44) de liquide laveur usé, comprenant en outre des moyens pour charger la matière à laver (S) et des moyens pour décharger la matière lavée (A), **caractérisé par le fait que** le tube (16) fixé au récipient (18) est monté mobile en rotation dans un carter cylindrique (10) et relié à un moteur d'entraînement (38) de sorte que le tube (16) sert d'arbre moteur du récipient (18) monté dans ledit carter (10), étant donné qu'à la paroi extérieure (28) dudit récipient (18) sont fixées des ailettes d'entraînement (32) aptes à transporter vers le haut la matière (S) chargée dans l'extrémité inférieure dudit carter (10), le tube (16) aussi bien que le récipient (18) commandé en rotation ayant des orifices de passage (30, 30') pour le liquide laveur.

2. Dispositif selon la revendication 1, **caractérisé par le fait que** les ailettes d'entraînement (32) consistent en segments de spire d'une hélice transporteuse.

3. Dispositif selon la revendication 1 ou 2, **caractérisé par le fait que** le corps cylindrique (50) du carter (10) est muni d'orifices de prise d'air (48) dans le carter (10).

4. Dispositif selon la revendication 3, **caractérisé par le fait que** les orifices de prise d'air (48) sont partiellement recouverts par des écrans extérieurs (52) de protection.

5. Dispositif selon une des revendications précédentes, **caractérisé par le fait que** sur l'extrémité supérieure du récipient (18) sont fixées des pales d'évacuation (34) aptes à éjecter la matière lavée dans un conduit de décharge (36) fixé à l'extrémité supérieure du carter (10).

6. Dispositif selon une des revendications précédentes, **caractérisé par le fait qu'**un conduit de charge (46) est fixé à l'extrémité inférieure du carter (10) dans lequel il débouche dans le sens radial ou tangentiel.
